# EUROPÄISCHE PATENTANMELDUNG

(11) **EP 3 783 512 A1**
(43) Veröffentlichungstag der Anmeldung: **24.02.2021**
(21) Anmeldenummer: 20192375.2
(22) Anmeldetag: 24.08.2020
(51) Int. Cl.: G06F 21/36, G06F 21/44

(54) **VERFAHREN ZUM FREIGEBEN EINER ANGEFORDERTEN VERBINDUNG ZWISCHEN EINEM ERSTEN GERÄT UND EINEM ZWEITEN GERÄT**

(30) Priorität: 23.08.2019 DE 102019212683
(71) Anmelder: Robert Bosch GmbH, 70442 Stuttgart (DE)
(72) Erfinder: Mueller, Tobias Wolfgang Andreas, 72074 Tuebingen (DE); Dezulian, Tobias, 72074 Tuebingen (DE)

(57) **Zusammenfassung**

Die Erfindung betrifft ein Verfahren zum Freigeben einer angeforderten Transaktion, insbesondere einer Drahtlos-Verbindung, vorzugsweise einer Bluetooth-Verbindung, zwischen einem ersten Gerät und einem zweiten Gerät, umfassend die Schritte:
- Bereitstellen von Bestätigungsinformationen anhand von ausgetauschten Informationen zwischen den beiden Geräten,
- Eindeutiges Zuordnen der Bestätigungsinformationen zu zumindest einem Piktogramm, ausgewählt aus einer Piktogrammmenge, umfassend zumindest zwei Piktogramme,
- Anzeigen einer Bestätigungsnachricht auf beiden Geräten, umfassend das zumindest eine Piktogramm,
- Freigeben oder Verwerfen der angeforderten Transaktion anhand eines Vergleichs der angezeigten Piktogramme auf den beiden Geräten.

## Beschreibung

### Technisches Gebiet

Die Erfindung betrifft ein Verfahren zum Freigeben einer angeforderten Transaktion, insbesondere einer Drahtlosverbindung, vorzugsweise einer Bluetooth-Verbindung, zwischen einem ersten Gerät und einem zweiten Gerät.

Die Erfindung betrifft weiter ein Gerät zum Freigeben einer angeforderten Transaktion mit einem weiteren Gerät, insbesondere einer Drahtlos-Verbindung, vorzugsweise einer Bluetooth-Verbindung.

Die Erfindung betrifft weiter ein System zum Durchführen einer Transaktion zwischen zwei Geräten über eine Verbindung zwischen den zwei Geräten.

### Stand der Technik

Obwohl die vorliegende Erfindung allgemein auf beliebige Transaktionen anwendbar ist, wird die vorliegende Erfindung in Bezug auf eine Transaktion in Form einer freizugebenden Bluetooth-Verbindung erläutert.

Bei tragbaren Geräten, beispielsweise Mobilfunkgeräten, Smartphones und dergleichen werden häufig Peripheriegeräte wie eine Smartwatch mittels einer Bluetooth-Verbindung zur Dateienübertragung verbunden. Zum Einrichten einer Verbindung zwischen den beiden Geräten muss ein "Pairing" der beiden Geräte miteinander erfolgen. Gemäß dem Bluetooth-Protokoll Version 4.2. erfolgt eine Autorisierung des jeweils anderen Geräts durch visuellen Vergleich einer sechsstelligen Dezimalzahl auf den beiden Geräten. Ein Nutzer der beiden Geräte muss die beiden Dezimalzahlen, die auf den beiden Geräten angezeigt werden, visuell vergleichen und kann dann - wenn diese übereinstimmen - die jeweilige Verbindung freigeben, was jedoch mühsam und zeitaufwendig ist.

Aus der DE 10 2013 004 602 A1 ist ein Verfahren zum Freigeben einer Transaktion bekannt geworden. Hierbei wird ein dynamisch änderbares Stimulationssignal in einer für einen Nutzer wahrnehmbaren Weise, unter anderem als Ton- oder Musikfolge, als lesbare Sprache oder als Symbole auf einem zweiten Gerät wiedergegeben. Ist ein Nutzer unaufmerksam, kann das Wiedergeben des Stimulationssignals ganz oder teilweise wiederholt werden.

### Offenbarung der Erfindung

In einer Ausführungsform stellt die vorliegende Erfindung ein Verfahren zum Freigeben einer angeforderten Transaktion, insbesondere einer Drahtlos-Verbindung, vorzugsweise einer Bluetooth-Verbindung, zwischen einem ersten Gerät und einem zweiten Gerät bereit, umfassend die Schritte
- Bereitstellen von Bestätigungsinformationen anhand von ausgetauschten Informationen zwischen den beiden Geräten,
- Eindeutiges Zuordnen der Bestätigungsinformationen zu zumindest einem Piktogramm, ausgewählt aus einer Piktogrammmenge, umfassend zumindest zwei Piktogramme,
- Anzeigen einer Bestätigungsnachricht auf beiden Geräten, umfassend das zumindest eine Piktogramm,
- Freigeben oder Verwerfen der angeforderten Transaktion anhand eines Vergleichs der angezeigten Piktogramme auf den beiden Geräten.

In einer weiteren Ausführungsform stellt die vorliegende Erfindung ein Gerät zum Freigeben einer angeforderten Transaktion mit einem weiteren Gerät, insbesondere einer Drahtlos-Verbindung, vorzugsweise einer Bluetooth-Verbindung bereit, ausgebildet zur Durchführung der folgenden Schritte
- Bereitstellen von Bestätigungsinformationen anhand von ausgetauschten Informationen mit dem weiteren Gerät,
- Eindeutiges Zuordnen der Bestätigungsinformationen zu zumindest einem Piktogramm, ausgewählt aus einer Piktogrammmenge,
- Anzeigen einer Bestätigungsnachricht, umfassend das zumindest eine Piktogramm,
- Freigeben oder Verwerfen der angeforderten Transaktion anhand des angezeigten zumindest einen Piktogramms.

In einer weiteren Ausführungsform stellt die vorliegende Erfindung ein System zum Durchführen einer Transaktion zwischen zwei Geräten über eine Verbindung zwischen den zwei Geräten bereit, wobei jedes der Geräte gemäß Anspruch 11 ausgebildet ist.

Einer der damit erzielten Vorteile ist, dass ein Vergleich der auf den beiden Geräten angezeigten Bestätigungsinformationen anhand der Piktogramme schnell, einfach und zuverlässig durchgeführt werden kann. Die Fehleranfälligkeit wird erheblich reduziert.

Weitere Merkmale, Vorteile und weitere Ausführungsformen sind im Folgenden beschrieben oder werden dadurch offenbar.

Gemäß einer vorteilhaften Weiterbildung werden die Bestätigungsinformationen in zumindest zwei Teile aufgeteilt und jedem Teil wird zumindest ein Piktogramm eindeutig zugeordnet. Dies reduziert die Anzahl der notwendigen Piktogramme, um die Bestätigungsinformationen anhand der Piktogramme darzustellen. Speicherplatz zur Speicherung der Piktogramme wird damit reduziert.

Gemäß einer weiteren vorteilhaften Weiterbildung werden die Bestätigungsinformationen als Ziffernfolge, insbesondere als Dezimalzahlenfolge oder als Binärzahlenfolge bereitgestellt. Damit wird eine einfache Berechnung der Bestätigungsinformationen anhand der ausgetauschten Informationen möglich.

Gemäß einer weiteren vorteilhaften Weiterbildung ist die Anzahl der Ziffern in jedem Teil gleich. Damit lässt sich auf besonders einfache Weise eine Umwandlung in beziehungsweise ein Zuordnen der jeweiligen Teile zu den Piktogrammen ermöglichen.

Gemäß einer weiteren vorteilhaften Weiterbildung wird die Piktogrammmenge auf dem jeweiligen Gerät individuell bereitgestellt. Damit wird die Flexibilität erhöht: Ein Nutzer kann so selbst entsprechende Piktogramme für die Piktogrammmenge vorauswählen.

Gemäß einer weiteren vorteilhaften Weiterbildung umfasst die Piktogrammmenge das Unicode Emoji Alphabet. Damit kann der Nutzer auf bekannte, normierte und vertraute Piktogramme beim Vergleich von Piktogrammen zurückgreifen, was die Fehleranfälligkeit beim Vergleich reduziert.

Gemäß einer weiteren vorteilhaften Weiterbildung wird die Piktogrammmenge anhand der Größe und Anzahl der Teile bereitgestellt. Damit wird die Effizienz erhöht, da die Größe der Piktogrammmenge auf die notwendige Anzahl von Piktogrammen beschränkt wird.

Gemäß einer weiteren vorteilhaften Weiterbildung erfolgt ein eindeutiges Zuordnen der Bestätigungsinformationen zu zumindest einem Piktogramm anhand einer Tabelle, die jeder möglichen Bestätigungsinformation ein Piktogramm eindeutig zuordnet. Damit ist eine schnelle und einfache Umwandlung in beziehungsweise Zuordnung von Bestätigungsinformationen zu Piktogrammen möglich.

Gemäß einer weiteren vorteilhaften Weiterbildung wird die Transaktion in Form einer Bestätigung einer Drahtlos-Verbindung, insbesondere Bluetooth-Verbindung, bereitgestellt. Vorteil hiervon ist, dass auf einfache Weise ein Freigeben einer Drahtlos-Verbindung bereitgestellt wird.

Gemäß einer weiteren vorteilhaften Weiterbildung werden die Bestätigungsinformationen vor einem Zuordnen in zumindest ein Piktogramm in ein anderes Format konvertiert. Vorteil hiervon ist eine höhere Flexibilität, da damit die Piktogramme in der Piktogrammmenge besser ausgenutzt werden können, wenn die Bestätigungsinformationen vor dem Zuordnen in ein für die Piktogrammzuordnung geeignetes Format umgewandelt werden.

Weitere wichtige Merkmale und Vorteile der Erfindung ergeben sich aus den Unteransprüchen, aus den Zeichnungen und aus dazugehöriger Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

### Kurze Beschreibung der Zeichnungen

- Figur 1: zeigt Schritte eines Verfahrens gemäß einer Ausführungsform der vorliegenden Erfindung;
- Figur 2: zeigt einen Vergleich eines bekannten Schritts mit einem Schritt gemäß einer Ausführungsform der vorliegenden Erfindung; und
- Figur 3: zeigt Schritte eines Verfahrens gemäß einer Ausführungsform der vorliegenden Erfindung.

### Ausführungsformen der Erfindung

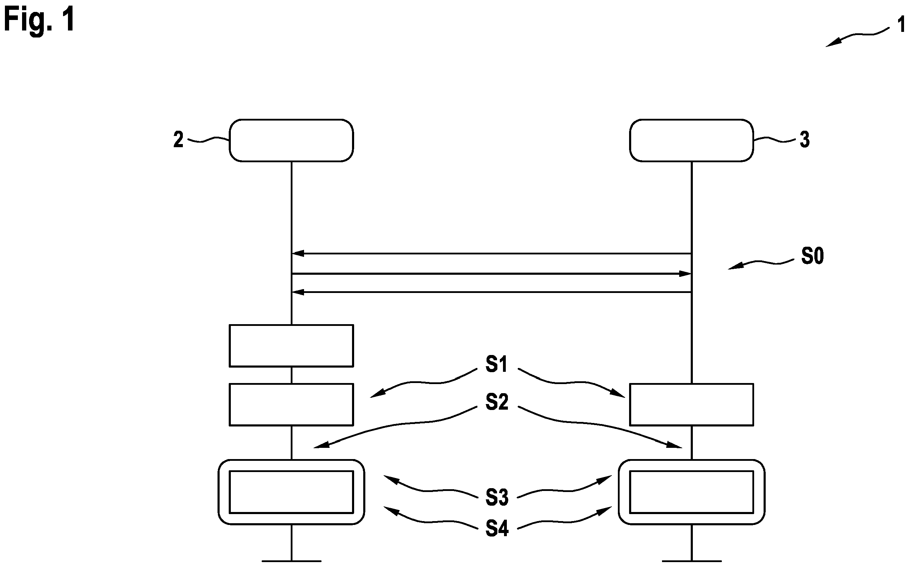

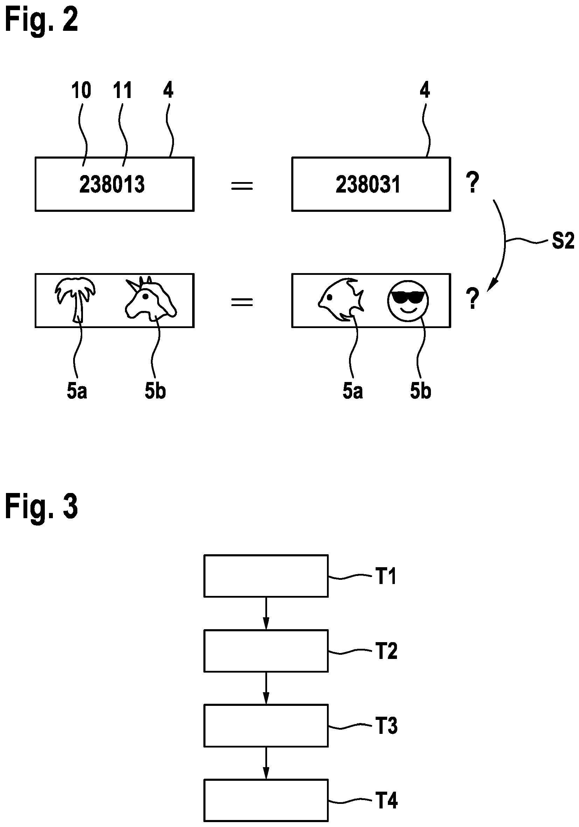

Figur 1 zeigt Schritte eines Verfahrens gemäß einer Ausführungsform der vorliegenden Erfindung und Figur 2 zeigt einen Vergleich eines bekannten Schritts mit einem Schritt gemäß einer Ausführungsform der vorliegenden Erfindung.

Im Detail sind in Figur 1 Schritte einer Bluetooth-Autorisierung anhand eines Zahlenvergleichs - numerical comparison - gemäß der Bluetooth-Spezifikation 4.2, Vol 3, Part H Section C.2.2.2.1 gezeigt. Hierbei werden zunächst zwei Geräte 2, 3, die miteinander kommunizieren möchten, jeweils initialisiert, um eine sichereren Verbindungsschlüssel LTK zu erzeugen. In beiden Geräten 2, 3 werden separat Zufallswerte erzeugt und ausgetauscht (Schritt S0). Beide Geräte 2, 3 berechnen dann separat in einem Schritt S1 Bestätigungsinformationen anhand der ausgetauschten Informationen. In einem in Figur 2 gezeigten zweiten Schritt S2 wird die hier als sechsstellige Dezimalzahl vorliegende Bestätigungsinformation in zwei gleich große Teile 5a, 5b, hier in Form von zwei dreistelligen Dezimalzahlen, aufgeteilt und diese beiden Teile 5a, 5b dann jeweils separat in Piktogramme umgewandelt beziehungsweise in eindeutiger Weise entsprechenden Piktogrammen zugeordnet. In einem dritten Schritt S3 werden diese dann auf beiden Geräten 2, 3 angezeigt und der Nutzer kann die dargestellte Information vergleichen. Stimmen diese überein, kann der Nutzer die angeforderte Freigabe der Verbindung bestätigen, ansonsten wird die angeforderte Freigabe der Verbindung abgelehnt. Bleibt der Nutzer innerbhalb einer gewissen Zeitspanne untätig kann ebenfalls die angeforderte Freigabe der Verbindung abgelehnt werden (Schritt S4).

Die Piktogrammmenge umfasst dabei vorzugsweise Piktogramme, die durch den menschlichen Benutzer leicht visuell unterscheidbar sind. Die Piktogramme können entweder selbst definiert werden oder es kann auf die auf vielen Endgeräten bereits vorhandenen Piktogramme des Unicode-Standards (Emoji) oder eine Untermenge davon zurückgegriffen werden. Diese sind zum Beispiel in der Emoji List v11.0 (https://unicode.org/emoji/charts/emoji-list.html) des Unicode Konsortiums definiert.

Die zu vergleichenden Bestätigungsinformationen können auch in Binärform vorliegen und in gleich große Bitfolgen (im weiteren "Teilfolgen" genannt) aufgeteilt werden. Die Größe der Bitfolgen hängt insbesondere von der Größe der zur Verfügung stehenden Piktorgammmenge ab.

Beispielsweise kann die sechsstellige Dezimalzahl der Figur 2 in einem weiteren Schritt in eine 20-stellige Bitfolge umgerechnet beziehungsweise konvertiert werden. Wird diese in zwei zehnstellige Bitfolgen aufgeteilt, dann reicht eine Piktorgrammmenge von 2¹⁰ = 1.024 unterschiedlichen Piktogrammen, um die ursprüngliche Dezimalzahl mittels einer zweistelligen Piktogrammfolge darzustellen.

Der Umfang der Piktogrammmenge korreliert insbesondere negativ mit der Länge der benötigten Piktorgrammfolge, das heißt, eine große Piktogrammmenge ermöglicht die Darstellung in kurzen Piktogrammfolgen und eine kleine Piktogrammmenge erfordert die Darstellung in längeren Piktogrammfolgen.

Weiter muss jede der insbesondere binären oder dezimalen Teilfolgen einem Piktogramm aus der Piktogrammmenge zugeordnet werden. Im einfachsten Fall, beispielsweise bei einer selbsterzeugten Piktogrammmenge, kann eine Teilfolge als Index in die in der Piktogrammmenge enthaltenen Piktogrammordnung verwendet werden. Soll aus einer größeren Piktogrammmenge nur ein Teil der Piktogramme verwendet werden, beispielsweise bei der Verwendung einer Untermenge in der im Unicode-Standard definierten Piktogramme, so wird eine geeignete Zuordnung definiert.

Die Piktogrammmenge wird insbesondere folgendermaßen gewählt:
- Gute Unterscheidbarkeit der Piktogramme einer Piktogrammenge.
   Dies kann negativ mit dem Umfang der Piktogrammmenge korrelieren. Ein Beispiel für recht ähnliche Piktogramme aus dem Unicode Emoji Alphabet sind die Nummern 372 ( 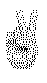 - "victory hand") und 373 ( 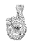 - "crossed fingers").
- Gute Verfügbarkeit der Piktogramme auf den verwendeten Geräten.
   So hat beispielsweise das Unicode Emoji Alphabet den Vorteil, dass es bereits standardmäßig auf vielen Endgeräten verfügbar ist. Zu beachten ist insbesondere beim Unicode Emoji Alphabet, dass die Ausprägung der Piktogramme auf verschiedenen Endgeräten unterschiedlich sein kann, so wird z.B. das "grinning face" auf Browsern ( 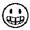 ) anders dargestellt als in einer App ( 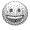 ).
- Eine umfangreiche Piktogrammmenge sowie komplexe Piktogramme erfordern mehr Ressourcen/Speicherplatz.

Figur 3 zeigt Schritte eines Verfahrens gemäß einer Ausführungsform der vorliegenden Erfindung.

In Figur 3 sind Schritte eines Verfahrens, ausgeführt auf einem Gerät zum Anfordern einer Verbindung mit einem weiteren Gerät, insbesondere einer Drahtlos-Verbindung, vorzugsweise einer Bluetooth-Verbindung gezeigt.
Das Gerät führt hierbei die folgenden Schritte aus:
In einem ersten Schritt T1 erfolgt ein Bereitstellen von Bestätigungsinformationen anhand von ausgetauschten Informationen mit dem weiteren Gerät.

In einem weiteren Schritt T2 erfolgt ein eindeutiges Zuordnen zu und/oder ein Umwandeln der Bestätigungsinformationen in zumindest ein Piktogramm ausgewählt aus einer Piktogrammmenge.

In einem weiteren Schritt T3 erfolgt ein Anzeigen einer Bestätigungsnachricht, umfassend das zumindest eine Piktogramm.

In einem letzten Schritt T4 erfolgt ein Freigeben oder Verwerfen der angeforderten Transaktion anhand des angezeigten zumindest einen Piktogramms.

Zusammenfassend weist zumindest eine der Ausführungsformen der Erfindung zumindest einen der folgenden Vorteile auf:
- Hohe Zuverlässigkeit
- Einfacher und schneller Vergleich
- Reduzierte Fehleranfälligkeit

Obwohl die vorliegende Erfindung anhand bevorzugter Ausführungsbeispiele beschrieben wurde, ist sie nicht darauf beschränkt, sondern auf vielfältige Weise modifizierbar.

Eine Transaktion gemäß der vorliegenden Anmeldung stellt insbesondere ein Austausch von Informationen dar.

## Patentansprüche

1. Verfahren zum Freigeben einer angeforderten Transaktion, insbesondere einer Drahtlos-Verbindung, vorzugsweise einer Bluetooth-Verbindung, zwischen einem ersten Gerät (2) und einem zweiten Gerät (3), umfassend die Schritte:
- Bereitstellen (S1) von Bestätigungsinformationen anhand von ausgetauschten Informationen zwischen den beiden Geräten,
- Eindeutiges Zuordnen (S2) der Bestätigungsinformationen zu zumindest einem Piktogramm (5), ausgewählt aus einer Piktogrammmenge, umfassend zumindest zwei Piktogramme,
- Anzeigen (S3) einer Bestätigungsnachricht auf beiden Geräten, umfassend das zumindest eine Piktogramm (5),
- Freigeben (S4) oder Verwerfen der angeforderten Transaktion anhand eines Vergleichs der angezeigten Piktogramme (5) auf den beiden Geräten (2, 3).

2. Verfahren gemäß Anspruch 1, wobei die Bestätigungsinformationen in zumindest zwei Teile (10, 11) aufgeteilt werden und jedem Teil (10, 11) zumindest ein Piktogramm (5a, 5b) eindeutig zugeordnet wird.

3. Verfahren gemäß einem der Ansprüche 1-2, wobei die Bestätigungsinformationen als Ziffernfolge (4), insbesondere als Dezimalzahlenfolge oder als Binärzahlenfolge, bereitgestellt werden.

4. Verfahren gemäß Anspruch 2 und 3, wobei die Anzahl der Ziffern in jedem Teil (10, 11) gleich ist.

5. Verfahren gemäß einem der Ansprüche 1-4, wobei die Piktogrammmenge auf dem jeweiligen Gerät (2, 3) individuell bereitgestellt wird.

6. Verfahren gemäß einem der Ansprüche 1-5, wobei die Piktogrammmenge das Unicode Emoji Alphabet umfasst.

7. Verfahren gemäß einem der Ansprüche 2 oder 4, wobei die Piktogrammmenge anhand der Größe und Anzahl der Teile (10, 11) bereitgestellt wird.

8. Verfahren gemäß einem der Ansprüche 1-7, wobei ein eindeutiges Zuordnen (S2) der Bestätigungsinformationen zu zumindest einem Piktogramm (5a, 5b) anhand einer Tabelle (6) erfolgt, die jeder möglichen Bestätigungsinformation ein Piktogramm (5a, 5b) zuordnet, insbesondere eindeutig.

9. Verfahren gemäß einem der Ansprüche 1-8, wobei die Transaktion in Form einer Bestätigung einer Drahtlos-Verbindung, insbesondere einer Bluetooth-Verbindung bereitgestellt wird.

10. Verfahren gemäß einem der Ansprüche 1-9, wobei die Bestätigungsinformationen vor einem Umwandeln in zumindest ein Piktogramm in ein anderes Format konvertiert werden.

11. Gerät (2) zum Freigaben einer angeforderten Transaktion mit einem weiteren Gerät (3), insbesondere einer Drahtlos-Verbindung, vorzugsweise einer Bluetooth-Verbindung, ausgebildet zur Durchführung der folgenden Schritte:
- Bereitstellen (T1) von Bestätigungsinformationen anhand von ausgetauschten Informationen mit dem weiteren Gerät,
- Eindeutiges Zuordnen (T2) der Bestätigungsinformationen zu zumindest einem Piktogramm (5a, 5b) ausgewählt aus einer Piktogrammmenge,
- Anzeigen (T3) einer Bestätigungsnachricht, umfassend das zumindest eine Piktogramm,
- Freigeben (T4) oder Verwerfen der angeforderten Transaktion anhand des angezeigten zumindest einen Piktogramms (5a, 5b).

12. System (1) zum Durchführen einer Transaktion zwischen zwei Geräten über eine Verbindung zwischen den zwei Geräten (2, 3), wobei jedes der Geräte gemäß Anspruch 11 ausgebildet ist.
